# EUROPEAN PATENT APPLICATION

(11) **EP 4 815 420 A1**
(43) Date of publication of application: **30.09.2026**
(21) Application number: 25189473.9
(22) Date of filing: 15.07.2025
(51) Int. Cl.: H04N 1/00, H04N 1/32

(54) **INFORMATION PROCESSING SYSTEM, INFORMATION PROCESSING PROGRAM, AND IMAGE READING APPARATUS**

(30) Priority: 24.03.2025 JP 2025049110
(71) Applicant: FUJIFILM Business Innovation Corp., Minato-ku Tokyo (JP)
(72) Inventor: KATO, Seishiro, Yokohama-shi, Kanagawa (JP); HAYASHI, Kazuo, Yokohama-shi, Kanagawa (JP); NODA, Hisashi, Yokohama-shi, Kanagawa (JP)
(74) Representative: Becker Kurig & Partner Patentanwälte mbB

(57) **Abstract**

An information processing system includes a processor configured to, in a reading apparatus that transports a document and reads an image of the document, in a case where the document is skewed, indicate that the document is skewed, using at least one of a position of the transported document or a mark affixed to the document.

## Description

### BACKGROUND OF THE INVENTION

### (i) Field of the Invention

The present disclosure relates to an information processing system, an information processing program, and an image reading apparatus.

### (ii) Description of Related Art

JP2006-245953A discloses an image reading apparatus including a document feeding and transport unit, an image reading unit, an image data storage unit, a reading abnormality detection unit, a reading result recording unit, and an abnormal image notification unit. The document feeding and transport unit continuously feeds and transports a plurality of documents. The image reading unit reads image data from the document fed and transported by the document feeding and transport unit. The image data storage unit stores the image data read by the image reading unit. The reading abnormality detection unit detects a reading abnormality during the reading of the transported document by the image reading unit. The reading result recording unit records whether a reading abnormality is present or absent. The abnormal image notification unit notifies the user of the read image data in which the reading abnormality has been detected by the reading abnormality detection unit. In the image reading apparatus, in a case where the reading abnormality detection unit detects a reading abnormality during the operation of continuously reading a plurality of documents, the continuous reading operation is not stopped, and the abnormal image notification unit notifies the user of the read image data, in which the reading abnormality has been detected by the reading abnormality detection unit, based on information of the reading result recording unit.

### SUMMARY OF THE INVENTION

As the information processing system, the following information processing system is considered: in a reading apparatus that transports a document and reads an image of the document, in a case where the document is skewed, a processor executes only a process of displaying that the document is skewed on a screen.

In the information processing system, it is necessary to sort a skewed document and a non-skewed document while collating the transported document and the display of the screen. Therefore, a sorting operation may be complicated.

An object of the present disclosure is to facilitate a sorting operation of sorting a skewed document and a non-skewed document in a case where a document is skewed in a reading apparatus that transports the document and reads an image of the document, as compared to a case where a processor executes only a process of displaying that the document is skewed on a screen.

According to a first aspect of the present disclosure, there is provided an information processing system including a processor configured to, in a reading apparatus that transports a document and reads an image of the document, in a case where the document is skewed, indicate that the document is skewed, using at least one of a position of the transported document or a mark affixed to the document.

According to a second aspect of the present disclosure, in the first aspect, the processor may be configured to, in the reading apparatus, in a case where the document is skewed, affix an identification mark for identifying whether or not skew occurs to at least one of a skewed document or a non-skewed document.

According to a third aspect of the present disclosure, in the second aspect, the processor may be configured not to, in the reading apparatus, in a case where the document is skewed, affix the identification mark to the skewed document and to affix the identification mark to the non-skewed document.

According to a fourth aspect of the present disclosure, in the second aspect or the third aspect, the processor may be configured to, in the reading apparatus, in a case where the document is skewed, affix the identification mark to a surface opposite to a reading surface of the document.

According to a fifth aspect of the present disclosure, in any one of the first to fourth aspects, the processor may be configured to, in the reading apparatus, in a case where the document is skewed, transport a skewed document and a non-skewed document to different transport destinations.

According to a sixth aspect of the present disclosure, in the fifth aspect, the processor may be configured to: in the reading apparatus, in a case where the document is not skewed, transport the document to a first transport destination; and, in the reading apparatus, in a case where the document is skewed, transport the non-skewed document to the first transport destination and transport the skewed document to a second transport destination.

According to a seventh aspect of the present disclosure, in any one of the first to sixth aspects, the processor may be configured to, in the reading apparatus, in a case where the document is skewed, indicate that the document is skewed, using at least one of the position of the transported document or the mark affixed to the document and then to provide a notification to prompt re-reading of the skewed document to a user.

According to an eighth aspect of the present disclosure, in the seventh aspect, the processor may be configured to, in a case where an execution instruction to re-read the skewed document is acquired, cause the reading apparatus to transport the document at a speed lower than a transport speed before the re-reading and to read the image, or to read the document in a stationary state.

According to a ninth aspect of the present disclosure, there is provided an information processing program causing a computer to execute a process including, in a reading apparatus that transports a document and reads an image of the document, in a case where the document is skewed, indicating that the document is skewed, using at least one of a position of the transported document or a mark affixed to the document.

According to a tenth aspect of the present disclosure, there is provided an image reading apparatus including: a transport unit that transports a document; a reading unit that reads an image of the document; and an indication unit that, in a case where the document is skewed, indicates that the document is skewed, using at least one of a position of the transported document or a mark affixed to the document.

According to the configuration of the first aspect of the present invention, in the reading apparatus that transports the document and reads the image of the document, in a case where the document is skewed, it is easier to perform a sorting operation of sorting the skewed document and the non-skewed document, as compared to a case where the processor executes only a process of displaying that the document is skewed on a screen.

According to the configuration of the second aspect of the present invention, the user can perform the sorting operation of sorting the skewed document and the non-skewed document while checking the identification mark affixed to the document.

According to the configuration of the third aspect of the present invention, in the re-reading of the skewed document, the reading of the identification mark is suppressed, as compared to a case where the processor affixes the identification mark to the skewed document.

According to the configuration of the fourth aspect of the present invention, in the re-reading of the reading surface of the document, the reading of the identification mark is suppressed, as compared to a case where the processor affixes the identification mark to the reading surface of the document.

According to the configuration of the fifth aspect of the present invention, it is easier to perform an operation of gathering only the skewed documents together, as compared to a case where the processor always transports the skewed document and the non-skewed document to the same transport destination.

According to the configuration of the sixth aspect of the present invention, it is easier for the user to recognize the skewed document, as compared to a case where the processor transports the skewed document to the first transport destination.

According to the configuration of the seventh aspect of the present invention, in the reading apparatus, in a case where the document is skewed, it is easier for the user to recognize that the skewed document is to be re-read, as compared to a case where the processor executes only the process of indicating that the document is skewed, using at least one of the position of the transported document or the mark affixed to the document.

According to the configuration of the eighth aspect of the present invention, in a case where the processor causes the reading apparatus to always execute the same reading operation, skew is less likely to occur in the re-reading of the skewed document.

According to the configuration of the ninth aspect of the present invention, in the reading apparatus that transports the document and reads the image of the document, in a case where the document is skewed, it is easier to perform the sorting operation of sorting the skewed document and the non-skewed document, as compared to a case where the processor executes only the process of displaying that the document is skewed on the screen.

According to the configuration of the tenth aspect of the present invention, in a case where the document is skewed, it is easier to perform the sorting operation of sorting the skewed document and the non-skewed document, as compared to a case where the indication unit executes only the process of displaying that the document is skewed on the screen.

### BRIEF DESCRIPTION OF THE DRAWINGS

Exemplary embodiment(s) of the present invention will be described in detail based on the following figures, wherein:
Fig. 1 is a schematic diagram showing an image reading system according to the present exemplary embodiment;
Fig. 2A is a diagram showing a state in which a skewed document is stamped, and Fig. 2B is a diagram showing a state in which a non-skewed document is not stamped;
Fig. 3 is an explanatory diagram showing first skew;
Fig. 4 is an explanatory diagram showing second skew;
Fig. 5 is an explanatory diagram showing third skew;
Fig. 6 is a block diagram showing an example of an information processing apparatus according to the present exemplary embodiment;
Fig. 7 is a block diagram showing an example of a functional configuration of the information processing apparatus according to the present exemplary embodiment;
Fig. 8 is a flowchart showing an example of an image reading flow according to the present exemplary embodiment; and
Fig. 9 is a schematic diagram showing an image reading system including an image reading apparatus according to a modification example.

### DETAILED DESCRIPTION OF THE INVENTION

Hereinafter, an example of an exemplary embodiment of the present invention will be described with reference to the drawings.

### <Image Reading System 100>

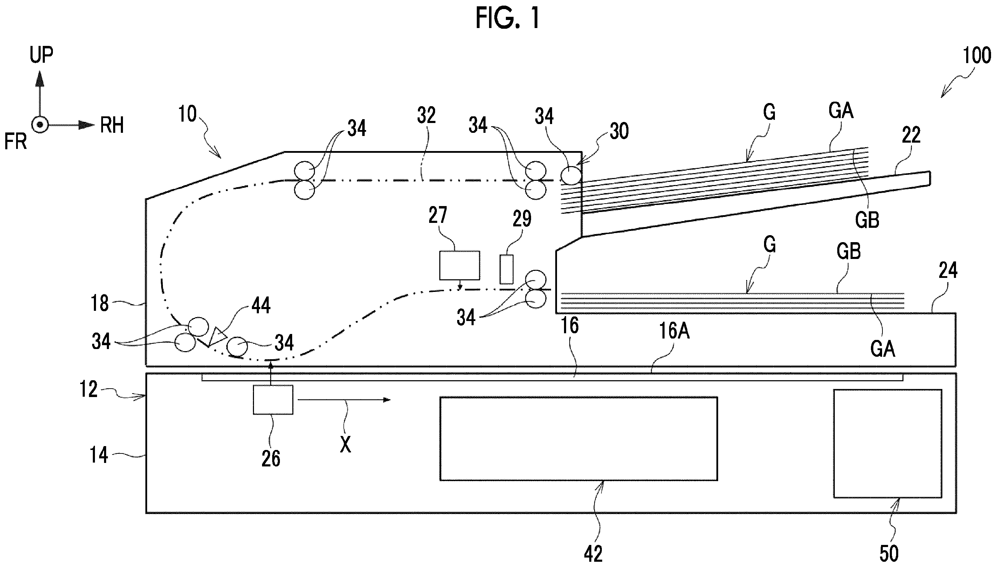

An image reading system 100 according to the present exemplary embodiment will be described. Fig. 1 is a schematic diagram showing the image reading system 100.

In addition, an arrow UP shown in each of the drawings including Fig. 1 indicates an upper side of a device provided in the system. Therefore, an opposite direction of the arrow UP is a lower side of the device. Further, an arrow FR shown in each of the drawings including Fig. 1 indicates a front side of the device. Therefore, an opposite direction of the arrow FR is a rear side of the apparatus. Furthermore, an arrow RH shown in each of the drawings including Fig. 1 indicates a right side of the apparatus. Therefore, an opposite direction of the arrow RH is a left side of the apparatus. Since these directions are directions defined for convenience of description, a configuration of the apparatus is not limited to these directions.

Moreover, a front-rear direction and a right-left direction are directions that can be called a lateral direction, a side direction, and a horizontal direction. In addition, the term "apparatus" may be omitted in each direction of the apparatus. That is, for example, "the upper side of the apparatus" may simply be described as "the upper side". Furthermore, a symbol having "·" written in "∘" in the drawings means an arrow pointing from the back to the front of the paper.

The image reading system 100 is a system that reads an image of a document G. Specifically, as shown in Fig. 1, the image reading system 100 includes an image reading apparatus 10 and an information processing apparatus 50. Hereinafter, each unit of the image reading system 100 will be described. The image reading system 100 is an example of an information processing system.

### <Image Reading Apparatus 10>

The image reading apparatus 10 shown in Fig. 1 is an apparatus that reads the image of the document G. Specifically, as shown in Fig. 1, the image reading apparatus 10 includes an apparatus main body 12, an opening and closing unit 18, a document accommodation unit 22, and a document discharge unit 24. In addition, the image reading apparatus 10 includes a transport unit 30, reading units 26 and 27, a stamping unit 29, and a display unit 42. Hereinafter, each unit of the image reading apparatus 10 will be described. Further, the image reading apparatus 10 is an example of a reading apparatus.

### <Apparatus Main Body 12>

The apparatus main body 12 shown in Fig. 1 is a portion in which each component of the image reading apparatus 10 is provided. The apparatus main body 12 includes a housing 14 and a platen glass 16.

The housing 14 is formed in a box shape with an opening at the top. The platen glass 16 is disposed in the opening of the housing 14. The document G, whose image is to be read in a stationary state, is placed on an upper surface 16A of the platen glass 16. The platen glass 16 transmits light emitted from the reading unit 26 to the document G placed on the upper surface 16A.

In the present exemplary embodiment, the reading unit 26 and the information processing apparatus 50 are disposed inside the apparatus main body 12 (specifically, the housing 14) as shown in Fig. 1. In addition, the display unit 42 is disposed on an outer surface (specifically, a front surface) of the apparatus main body 12.

### <Opening and Closing unit 18>

The opening and closing unit 18 shown in Fig. 1 is a structural portion that is opened and closed with respect to the apparatus main body 12. The opening and closing unit 18 is attached to the apparatus main body 12 to be openable and closable between a closed position (a position shown in Fig. 1) where the upper surface 16A of the platen glass 16 of the apparatus main body 12 is covered and an open position where the upper surface 16A of the platen glass 16 of the apparatus main body 12 is exposed. For example, the opening and closing unit 18 has a rear end portion that is supported by a support portion (not shown) provided on the rear side of the apparatus main body 12 and is opened and closed by moving a front end portion up and down with the rear end portion as a fulcrum.

Further, the opening and closing unit 18 also functions as a structure in which each component of the image reading apparatus 10 is provided. In the present exemplary embodiment, the transport unit 30, the reading unit 27, and the stamping unit 29 are disposed inside the opening and closing unit 18 as shown in Fig. 1. In addition, the document accommodation unit 22 and the document discharge unit 24 are disposed on the side of the opening and closing unit 18 (the right side in Fig. 1) as shown in Fig. 1.

### <Document Accommodation Unit 22>

The document accommodation unit 22 shown in Fig. 1 is a portion that accommodates the document G in the image reading apparatus 10. As shown in Fig. 1, the document accommodation unit 22 extends from the opening and closing unit 18 to a side (specifically, an upper right diagonal side). The document G is stacked on the document accommodation unit 22, and the document accommodation unit 22 accommodates the stacked document G.

The document G accommodated in the document accommodation unit 22 is an object whose image is to be read by the reading units 26 and 27. Examples of the document G include paper and films. Examples of the film include a resin film and a metal film. In addition, the document G is not limited to the above, and various documents can be used.

### <Document Discharge Unit 24>

The document discharge unit 24 shown in Fig. 1 is a portion from which the document G transported by the transport unit 30 is discharged. As shown in Fig. 1, the document discharge unit 24 extends from the opening and closing unit 18 to the side (specifically, the right side) below the document accommodation unit 22. The document G transported by the transport unit 30 is stacked on the document discharge unit 24, and the document discharge unit 24 accommodates the document G.

### <Transport Unit 30>

The transport unit 30 shown in Fig. 1 is a component that transports the document G in the image reading apparatus 10. In the present exemplary embodiment, the transport unit 30 includes a document transport path 32 and a plurality of transport members 34.

The document transport path 32 is a transport path through which the document G is transported. As shown in Fig. 1, the document transport path 32 is formed in a substantially C-shape in a front view from the document accommodation unit 22 to the document discharge unit 24. In addition, the front view means a view from the front side to the rear side.

The transport member 34 is configured as, for example, a transport roller that is rotationally driven. The transport member 34 transports the document G accommodated in the document accommodation unit 22 to the document discharge unit 24 along the document transport path 32. Further, the transport member 34 may be, for example, a transport member, such as a transport belt or a transport drum, and various transport members can also be used.

### <Reading Units 26 and 27>

The reading units 26 and 27 shown in Fig. 1 are components that read the image of the document G transported by the transport unit 30. The reading unit 26 is provided below the platen glass 16 in the apparatus main body 12. The reading unit 26 faces one surface (hereinafter, referred to as a reading surface GA) of the document G transported through the document transport path 32, with the platen glass 16 interposed between the reading unit 26 and the one surface. The reading unit 26 irradiates the reading surface GA of the document G transported through the document transport path 32 with light and focuses reflected light from the reading surface GA with an image sensor to read an image.

The reading unit 26 can read images of both the document G transported by the transport unit 30 and the document G placed on the upper surface 16A of the platen glass 16. In a case where the image of the document G placed on the upper surface 16A of the platen glass 16 is read, the reading unit 26 is moved in a direction of an arrow X along the platen glass 16 to read the image of the reading surface GA of the document G.

As shown in Fig. 1, the reading unit 27 is disposed on an inner peripheral side of the document transport path 32 having the substantially C-shape on the downstream side of the reading unit 26 in the transport direction in the document transport path 32. The reading unit 27 faces a surface (hereinafter, referred to as an opposite surface GB) that is opposite to the reading surface GA of the document G transported through the document transport path 32. The reading unit 27 irradiates the opposite surface GB of the document G transported through the document transport path 32 with light and focuses reflected light from the opposite surface GB with an image sensor to read an image.

For example, a contact-type image sensor that is called a contact image sensor (CIS) is used as the reading units 26 and 27. In addition, the image sensor used in the reading units 26 and 27 is not limited to the contact-type image sensor and may be, for example, an image sensor such as a charge coupled device (CCD) or a complementary metal oxide semiconductor (CMOS). Various reading units that can read the image of the document G can be used as the reading unit according to the present disclosure.

### <Display Unit 42>

The display unit 42 displays presentation information to be presented to the user to notify the user of the presentation information. Examples of the display unit 42 include a liquid crystal display and an organic electro-luminescence (EL) display. Various notifications can be displayed on the display unit 42.

Further, the display unit 42 functions as an input unit to which an instruction from the user is input. In the present exemplary embodiment, the display unit 42 is configured as, for example, a resistive touch panel or a capacitive touch panel, and an instruction from the user is input to the display unit 42 by a contact operation of the user. The user is an example of a user.

Further, the input unit may be configured separately from the display unit 42. **In** this case, the input unit may be configured as, for example, an input key (for example, a keyboard, a mouse, or an operation button) through which an input operation is performed by the user.

### <Detection Unit 44>

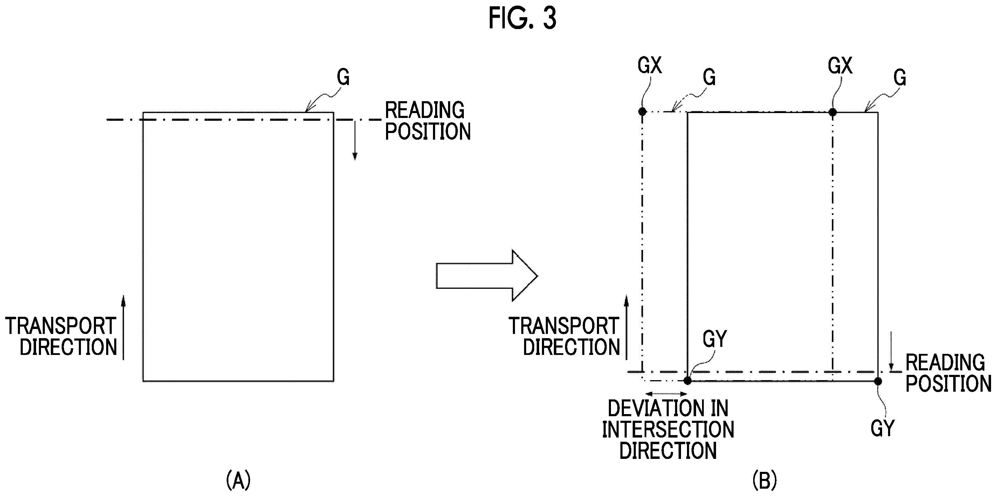

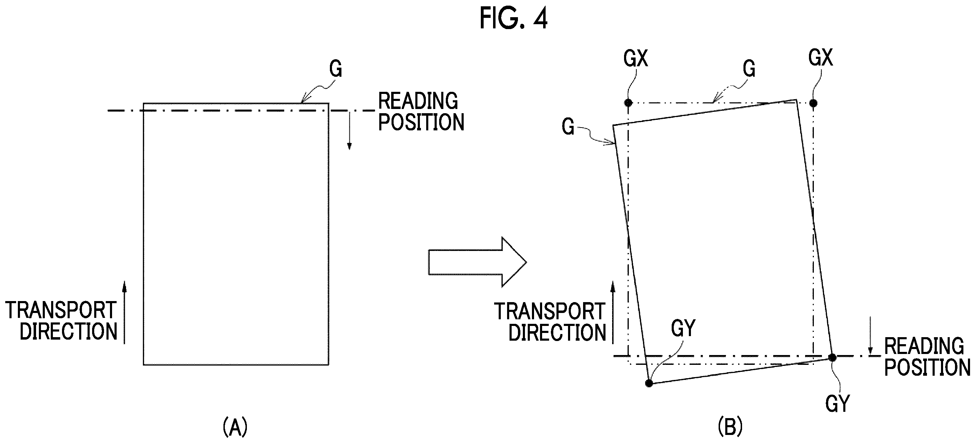

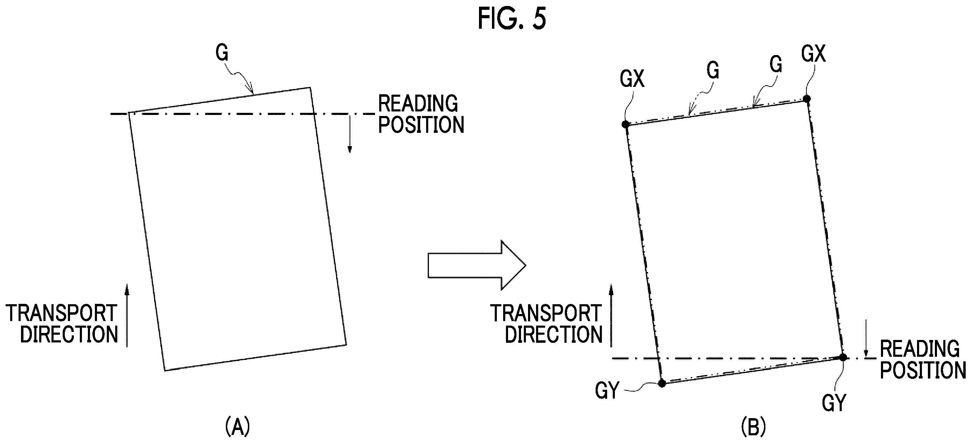

A detection unit 44 detects, for example, both right and left corner portions GX (see Figs. 3, 4, and 5) of a leading end of the document G and both right and left corner portions GY (see Figs. 3, 4, and 5) of a trailing end of the document G. The detection unit 44 is disposed on the upstream side of the reading unit 26 in the transport direction in the document transport path 32. Therefore, at least the right and left corner portions GX of the leading end of the document G are detected before the image of the document G is read by the reading unit 26. In addition, the detection unit 44 is used to detect skew (specifically, first skew (see Fig. 3), second skew (see Fig. 4), and third skew (see Fig. 5)) of the document G which will be described below.

For example, a reflection-type or transmission-type optical sensor is used as the detection unit 44. For example, a line sensor having a length equal to or longer than the width of the document G is used as the optical sensor.

### <Stamping Unit 29>

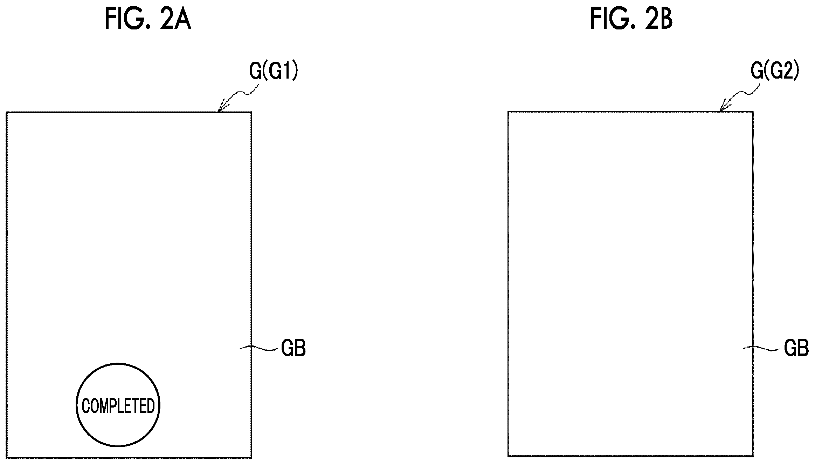

The stamping unit 29 is an example of an indication unit. The stamping unit 29 is disposed on the downstream side of the reading unit 27 in the transport direction and on the upstream side of the document discharge unit 24 in the transport direction in the document transport path 32. In the image reading apparatus 10, in a case where the document G is skewed, the stamping unit 29 stamps the document G that is not skewed (hereinafter, referred to as a non-skewed document G1) as shown in Fig. 2A. On the other hand, the stamping unit 29 does not stamp the document G that is skewed (hereinafter, referred to as a skewed document G2) as shown in Fig. 2B. As described above, in a case where the document G is skewed, the stamping unit 29 changes the display of the document G between the non-skewed document G1 and the skewed document G2.

The stamping unit 29 stamps the non-skewed document G1 and does not stamp the skewed document G2 to indicate that the skewed document G2 is skewed. In other words, the stamping unit 29 affixes a mark to the document G to indicate that the document G is skewed.

A seal indicating that the reading of the image has been completed is used as the seal affixed by the stamping unit 29. The seal indicates that the image has been properly read, that is, that there is no skew.

In the present exemplary embodiment, the stamping unit 29 stamps the non-skewed document G1 and does not stamp the skewed document G2. Therefore, the seal can be referred to as an identification mark for identifying whether or not skew occurs. Therefore, the stamping unit 29 can be referred to as a component that affixes the identification mark. Further, the seal can also be referred to as a distinguishing mark for distinguishing between the non-skewed document G1 and the skewed document G2. Therefore, the stamping unit 29 can be referred to as a component that affixes the distinguishing mark.

For example, the stamping unit 29 stops the driving of the transport member 34 of the transport unit 30 to stop the document G and applies a stamp to the document G in a stationary state. The stamping unit 29 moves the stamp up and down using a driving unit, such as a cylinder, and stamps the opposite surface GB of the document G.

### <Skew of Document G>

As shown in Figs. 3, 4, and 5, there are a plurality of types of skew of the document G. The types include, example, the first skew (see Fig. 3), the second skew (see Fig. 4), and the third skew (see Fig. 5).

The first skew occurs in a case where the document G deviates in a direction intersecting (specifically, orthogonal to) the transport direction during the reading of the image as shown in parts (A) and (B) in Fig. 3. In the first skew, the position of the document G in the intersection direction changes as the document G advances. In addition, the part (A) in Fig. 3 shows the position of the document G when the reading is started. In the part (B) in Fig. 3, the position of the document G when the reading is ended is represented by a solid line. In the part (B) in Fig. 3, the position of the document G when the reading is started is represented by a two-dot chain line.

The second skew occurs in a case where the document G is rotated during the reading of the image as shown in parts (A) and (B) in Fig. 4. In the second skew, the orientation (angle) of the document G changes as the document G advances. In addition, the part (A) in Fig. 4 shows the position of the document G when the reading is started. In the part (B) in Fig. 4, the position of the document G when the reading is ended is represented by a solid line. In the part (B) in Fig. 4, the position of the document G when the reading is started is represented by a two-dot chain line.

The third skew occurs in a case where the document G is transported in an obliquely inclined state during the reading of the image as shown in parts (A) and (B) in Fig. 5. In the third skew, the position of the document G in the intersection direction and the orientation (angle) of the document G do not change as the document G advances. In addition, the part (A) in Fig. 5 shows the position of the document G when the reading is started. In the part (B) in Fig. 5, the position of the document G when the reading is ended is represented by a solid line. In the part (B) in Fig. 5, the position of the document G when the reading is started is represented by a two-dot chain line.

In the present exemplary embodiment, for example, the document G subjected to the first skew or the second skew is treated as the skewed document G2. In the present exemplary embodiment, for example, the document G subjected to the third skew is treated as the non-skewed document G1. For the document G subjected to the third skew, a process of correcting the angle of the read image by the amount of inclination of the document G is performed.

### <Detection of Skew of Document G>

The detection unit 44 detects both the right and left corner portions GX and GY of the leading end and the trailing end of the document G to detect the first skew (see Fig. 3), the second skew (see Fig. 4), and the third skew (see Fig. 5).

For example, in a case where the detection results of the detection unit 44 show that the positions of both the right and left corner portions GX of the leading end of the document G and the positions of both the right and left corner portions GY of the trailing end of the document G deviate in the direction intersecting the transport direction, the detection unit 44 detects the occurrence of the first skew (see Fig. 3).

For example, in a case where the detection results of the detection unit 44 show that the inclination of the leading end of the document G is different from the inclination of the trailing end of the document G, the detection unit 44 detects the occurrence of the second skew (see Fig. 4).

For example, in a case where the detection results of the detection unit 44 show that the inclination of the leading end of the document G is the same as the inclination of the trailing end of the document G, the detection unit 44 detects the occurrence of the third skew (see Fig. 5).

### <Information Processing Apparatus 50>

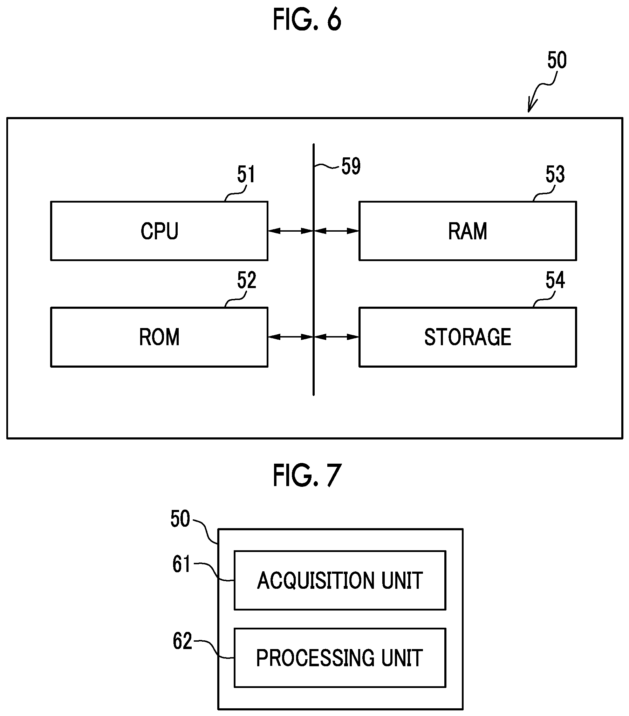

The information processing apparatus 50 has functions of a computer and includes a central processing unit (CPU) 51, a read only memory (ROM) 52, a random access memory (RAM) 53, and a storage 54 as shown in Fig. 6. The CPU 51, the ROM 52, the RAM 53, and the storage 54 are connected to each other via a connection line 59.

The CPU 51 is a central processing unit and executes various programs including an information processing program or controls each unit. The ROM 52 stores various programs including the information processing program and various types of data. The RAM 53 temporarily stores programs or data as a work area. The storage 54 is configured as a storage medium, such as a hard disk drive (HDD), a solid state drive (SSD), or a flash memory, and stores various programs including an operating system and various types of data. In addition, the information processing program may be stored in the storage 54.

In the information processing apparatus 50, the CPU 51 reads various programs including the information processing program from the ROM 52 or from the storage 54 and executes the programs using the RAM 53 as the work area. The CPU 51 executes the information processing program to implement various functions. Hereinafter, a functional configuration implemented by cooperation between the CPU 51 as a hardware resource and the information processing program as a software resource will be described. Fig. 7 is a block diagram showing an example of the functional configuration of the information processing apparatus 50 according to the present exemplary embodiment.

In the information processing apparatus 50, the CPU 51 executes the information processing program to function as an acquisition unit 61 and a processing unit 62 as shown in Fig. 7.

The acquisition unit 61 acquires various user instructions input by the user via the display unit 42 as the input unit. The acquisition unit 61 acquires, for example, a reading instruction to read the image of the document G as the user instruction.

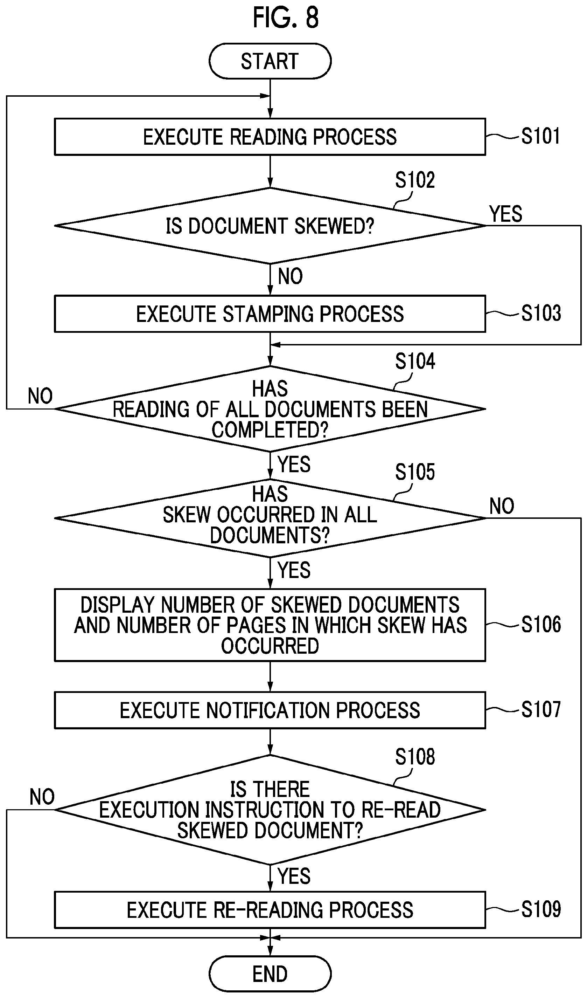

In a case where the acquisition unit 61 acquires the reading instruction, the processing unit 62 executes an image reading flow (see Fig. 8) of reading the image of the document G.

The information processing apparatus 50 may be configured as a single information processing apparatus 50 or may be configured as a plurality of information processing apparatuses 50. Therefore, the process executed by the information processing apparatus 50 may be executed by the single information processing apparatus 50 or may be executed by the plurality of information processing apparatuses 50.

Further, the information processing apparatus 50 may be referred to as a control device that controls each unit of the image reading apparatus 10. The information processing apparatus 50 may be understood as an example of the information processing system. In addition, the information processing apparatus 50 may be understood as a component of the image reading apparatus 10. In this case, the image reading apparatus 10 may be understood as an example of the information processing system.

### <Image Reading Flow>

Next, an example of the image reading flow executed in the image reading system 100 will be described. Fig. 8 is a flowchart showing an example of the image reading flow executed in the image reading system 100. The flow is an example of an information processing method.

The present flow is started to be executed, for example, in a case where the CPU 51 acquires the reading instruction to read the image of the document G. The CPU 51 acquires, for example, the reading instruction as an instruction from the user through the display unit 42.

In a case where the CPU 51 starts the present flow, the CPU 51 executes a reading process of reading the image of the document G in Step S101. In the reading process, in the image reading apparatus 10, the transport unit 30 transports the document G accommodated in the document accommodation unit 22 to the document discharge unit 24, and the reading unit 26 or the reading units 26 and 27 read the image.

Then, in Step S102, the CPU 51 determines whether or not the document G is skewed. In a case where the CPU 51 determines that the document G is skewed (Step S102: YES), the CPU 51 proceeds to Step S104. In a case where the CPU 51 determines that the document G is not skewed (NO in Step S102), the CPU 51 proceeds to Step S103. In the present exemplary embodiment, as described above, the CPU 51 treats the first skew and the second skew as the skew of the document. In addition, the CPU 51 detects the skew of the document, using the above-described "detection of the skew of the document G", and determines whether or not the document G is skewed.

In Step S103, The CPU 51 executes a stamping process of stamping the document G. In the stamping process, the stamping unit 29 stamps the opposite surface GB of the non-skewed document G1. On the other hand, the stamping unit 29 does not stamp the skewed document G2. Therefore, the skew of the skewed document G2 is indicated. Therefore, the stamping process is a process of affixing the mark (specifically, with which the non-skewed document G1 is stamped and with which the skewed document G2 is not stamped) to the document G to indicate that the skewed document G2 is skewed.

As described above, the seal with which the document G is stamped is referred to as an identification mark for identifying whether or not skew occurs. Therefore, the stamping process is a process that affixes the identification mark to the skewed document G2 and does not affix the identification mark to the opposite surface GB of the non-skewed document G1.

In Step S104, the CPU 51 determines whether or not the reading of all of the documents G accommodated in the document accommodation unit 22 has been executed. In a case where the CPU 51 determines that the reading of all of the documents G has been executed (Step S104: YES), the CPU 51 proceeds to Step S105. In a case where the CPU 51 determines that the reading of all of the documents G has not been executed (NO in Step S104), the CPU 51 proceeds to Step S101. That is, in a case where there is the document G that has not been subjected to the reading process, the CPU 51 proceeds to Step S101. Therefore, the CPU 51 repeats Steps S101 to S103 until the reading of all of the documents G is completed.

In Step S105, the CPU 51 determines whether or not skew has occurred in any of the documents G in a case where image reading is performed on all of the documents G. In a case where the CPU 51 determines that the skew has occurred in any of the documents G (YES in Step S105), the CPU 51 proceeds to Step S106. In a case where the CPU 51 determines that the skew has not occurred in all of the documents G (NO in Step S105), the CPU 51 ends the present flow.

In Step S106, the CPU 51 displays, on the display unit 42, the number of skewed documents G2 and the number of pages (number of sheets) in which the skew has occurred in all of the documents G. Then, in Step S107, the CPU 51 executes a notification process. In the notification process, the CPU 51 provides a notification to prompt the re-reading of the skewed document G2 to the user. Specifically, for example, a notification, such as "Please reload the skewed document G2 among the documents G discharged to the document discharge unit 24 into the document accommodation unit 22 and issue a re-reading execution instruction", is displayed on the display unit 42. Therefore, the user is prompted to sort the skewed document G2 from the documents G discharged to the document discharge unit 24 and then to re-read the skewed document G2.

Then, in Step S108, the CPU 51 determines whether or not an execution instruction to re-read the skewed document G2 has been acquired. In a case where the CPU 51 determines that the execution instruction to re-read the skewed document G2 has been acquired (Step S108: YES), the CPU 51 proceeds to Step S109. In a case where the CPU 51 determines that the execution instruction to re-read the skewed document G2 has not been acquired (NO in Step S108), the CPU 51 ends the present flow.

The CPU 51 executes a re-reading process in Step S109 and ends the present flow. In the re-reading process, in the image reading apparatus 10, the transport unit 30 transports the document G at a speed lower than the transport speed before the re-reading to read the image of the document G. The transport speed before the re-reading is a transport speed that is normally used.

### <Operation According to Present Exemplary Embodiment>

In the present exemplary embodiment, as described above, in the image reading apparatus 10, in a case where the document G is skewed, the CPU 51 affixes the mark to the document G to indicate that the document G is skewed.

Therefore, the user can sort the skewed document G2 and the non-skewed document G1 while checking the mark affixed to the document G. Therefore, in the image reading apparatus 10, in a case where the document G is skewed, it is easier to perform a sorting operation of sorting the skewed document G2 and the non-skewed document G1, as compared to a case where the CPU 51 performs only the process of displaying that the document G is skewed on the screen.

In the present exemplary embodiment, in the image reading apparatus 10, in a case where the document G is skewed, the CPU 51 does not affix the identification mark to the skewed document G2 and affixes the identification mark to the non-skewed document G1.

Therefore, in a case where the skewed document G2 is re-read, the reading of the identification mark is suppressed, as compared to a case where the CPU 51 affixes the identification mark to the skewed document G2.

In addition, in the present exemplary embodiment, in the image reading apparatus 10, in a case where the document G is skewed, the CPU 51 affixes the identification mark to the opposite surface GB of the document G.

Therefore, in a case where the reading surface GA of the document G is re-read, the reading of the identification mark is suppressed, as compared to a case where the CPU 51 affixes the identification mark to the reading surface GA of the document G.

Further, in the present exemplary embodiment, in the image reading apparatus 10, in a case where the document G is skewed, the CPU 51 affixes the mark to the document G to indicate that the document G is skewed and then provides a notification to prompt the re-reading of the skewed document G2 to the user.

Therefore, in the image reading apparatus 10, in a case where the document G is skewed, it is easier for the user to recognize that the skewed document G2 needs to be re-read, as compared to a case where the CPU 51 executes only the process of affixing the mark to the document G to indicate that the document G is skewed.

Further, in the present exemplary embodiment, in a case where the execution instruction to re-read the skewed document G2 is acquired, the CPU 51 causes the image reading apparatus 10 to transport the document G at a speed lower than the transport speed before the re-reading and to read the image.

Therefore, in a case where the CPU 51 causes the image reading apparatus 10 to always execute the same reading operation, skew is less likely to occur in the re-reading of the skewed document G2.

### <Modification Example of Stamping Process>

In the stamping process (Step S103), the identification mark is not affixed to the skewed document G2 and is affixed to the opposite surface GB of the non-skewed document G1. However, the present invention is not limited thereto. In the stamping process, for example, the identification mark may be affixed to the skewed document G2 and may not be affixed to the non-skewed document G1. In addition, in the stamping process, for example, the identification mark may be affixed to both the skewed document G2 and the non-skewed document G1.

As described above, in the image reading apparatus 10, the following configuration can be adopted: in a case where the document G is skewed, the CPU 51 affixes the identification mark for identifying whether or not skew occurs to at least one of the skewed document G2 or the non-skewed document G1.

This enables the user to perform the sorting operation of sorting the skewed document G2 and the non-skewed document G1 while checking the identification mark affixed to the document G.

A mark or seal indicating that the reading of the image has not been completed is used as the identification mark affixed to the skewed document G2. The mark indicates that the reading of the image has not been properly completed, that is, skew has occurred. Therefore, the mark can be referred to as an identification mark for identifying whether or not skew occurs.

Further, in the stamping process, the identification mark may be affixed to the reading surface GA of the document G. Therefore, the following configuration can be adopted: in a case where the identification mark is affixed to the non-skewed document G1, the identification mark is affixed to at least one of the reading surface GA or the opposite surface GB of the non-skewed document G1. In addition, the following configuration can be adopted: in a case where the identification mark is affixed to the skewed document G2, the identification mark is affixed to at least one of the reading surface GA or the opposite surface GB of the skewed document G2.

### <Modification Example of Re-reading Process>

In the re-reading process (Step S109), the image reading apparatus 10 is caused to transport the document G at a speed lower than the transport speed before the re-reading and to read the image of the document G. However, the present invention is not limited thereto. In the re-reading process, for example, the document G in a stationary state may be read by the image reading apparatus 10. Specifically, in the image reading apparatus 10, the reading unit 26 is moved in the direction of the arrow X along the platen glass 16 to read the image of the document G placed on the upper surface 16A of the platen glass 16.

In this case, in the notification process (Step S107), for example, a notification, such as "Please place the skewed document G2 among the documents G discharged to the document discharge unit 24 on the platen glass 16 and issue a re-reading execution instruction" is displayed on the display unit 42.

Further, in the re-reading process (Step S109), the transport unit 30 of the image reading apparatus 10 may transport the document G at the transport speed that is normally used, without changing the transport speed, and the image of the document G may be read.

### <Transport Destination Change Process>

The CPU 51 may execute a transport destination change process of transporting the skewed document G2 and the non-skewed document G1 to different transport destinations, instead of the stamping process (Step S103).

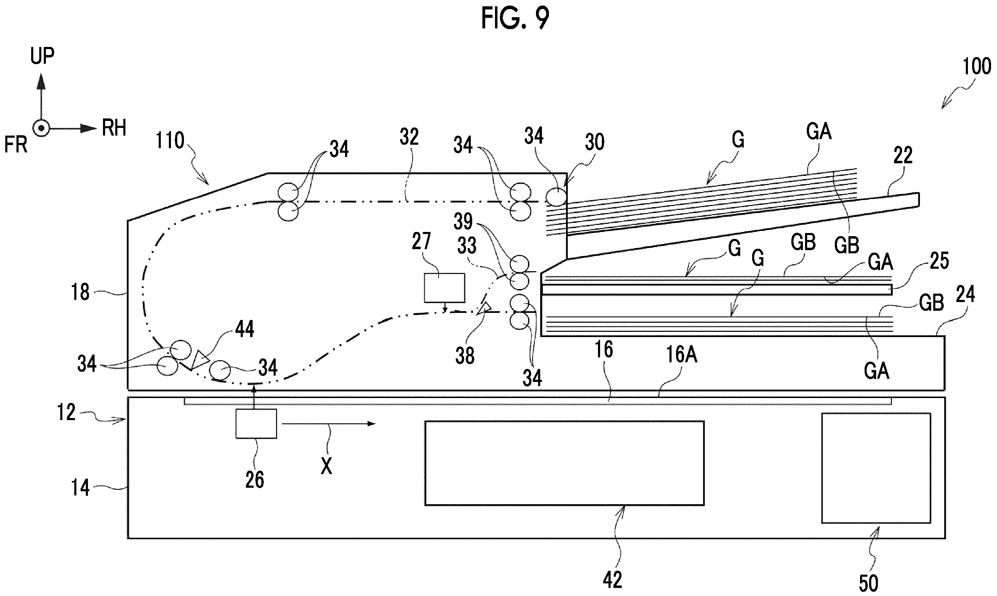

In this case, the image reading system 100 includes an image reading apparatus 110 as shown in Fig. 9. In Fig. 9, the same reference numerals are given to the identical components as the components in the image reading apparatus 10.

The image reading apparatus 110 includes a document discharge unit 25 in addition to the document discharge unit 24. The transport unit 30 has a document transport path 33 that branches from the document transport path 32 and that is for transporting the document G to the document discharge unit 25. The document transport path 33 branches from the document transport path 32 on the downstream side of the reading unit 27 and on the upstream side of the document discharge unit 24.

Further, the transport unit 30 includes a switching mechanism 38 and a transport member 39. The switching mechanism 38 switches the transport destination to which the document G is transported to either the document discharge unit 24 or the document discharge unit 25. The transport member 39 is a member that transports the document G to the document discharge unit 25. The transport member 39 is configured as, for example, a plurality of transport rollers that are rotationally driven. In addition, the transport member 39 may be, for example, a transport member, such as a transport belt or a transport drum, and various transport members can also be used.

The document discharge unit 24 is an example of a first transport destination. The document discharge unit 25 is an example of a second transport destination. The transport unit 30 is an example of an indication unit. In addition, the image reading apparatus 110 does not have the stamping unit 29.

In the image reading system 100 shown in Fig. 9, the CPU 51 transports the non-skewed document G1 to the document discharge unit 24 and transports the skewed document G2 to the document discharge unit 25 as the transport destination change process. As described above, in the image reading system 100 shown in Fig. 9, the position (specifically, the transport destination) of the transported document G indicates that the document G has been skewed. In addition, in the image reading apparatus 110, in a case where the document G is not skewed, the CPU 51 transports the document G to the document discharge unit 24.

As described above, in the image reading system 100 shown in Fig. 9, in a case where the document G is skewed in the image reading apparatus 110, the CPU 51 indicates that the document G has been skewed, using the position of the transported document G.

Therefore, in the image reading apparatus 110, in a case where the document G is skewed, it is easier to perform the sorting operation of sorting the skewed document G2 and the non-skewed document G1, as compared to a case where the CPU 51 performs only the process of displaying that the document G has been skewed on the screen.

Further, in the image reading system 100 shown in Fig. 9, in a case where the document G is skewed in the image reading apparatus 110, the CPU 51 transports the skewed document G2 and the non-skewed document G1 to different transport destinations.

Therefore, it is easier to perform the operation of gathering only the skewed documents G2 together, as compared to a case where the CPU 51 always transports the skewed document G2 and the non-skewed document G1 to the same transport destination.

More specifically, in the image reading apparatus 110, in a case where the document G is not skewed, the CPU 51 transports the document G to the document discharge unit 24. In a case where the document G is skewed, the CPU 51 transports the non-skewed document G1 to the document discharge unit 24 and transports the skewed document G2 to the document discharge unit 25.

Therefore, the user easily recognizes the skewed document G2 as compare to a case where the CPU 51 transports the skewed document G2 to the document discharge unit 24.

In the image reading system 100 shown in Fig. 9, the transport destination change process is executed instead of the stamping process (Step S103). However, both the stamping process and the transport destination change process may be executed.

In this case, in the image reading apparatus 110, for example, the stamping unit 29 is disposed on the upstream side of a portion in which the document transport path 33 starts to branch from the document transport path 32 and on the downstream side of the reading unit 27. For example, in the image reading apparatus 110, in a case where the document G is skewed, the CPU 51 does not affix the identification mark to the skewed document G2, affixes the identification mark to the non-skewed document G1, transports the non-skewed document G1 to the document discharge unit 24, and transports the skewed document G2 to the document discharge unit 25.

### <Other Modification Examples>

In the image reading system 100 shown in Fig. 9, as an example of indicating that the document G is skewed using the position of the transported document G, the skewed document G2 and the non-skewed document G1 are transported to different transport destinations. However, the present invention is not limited thereto. For example, in a case where the document G is discharged to the document discharge unit 24, the skewed document G2 and the non-skewed document G1 may be discharged to deviate in the direction intersecting the transport direction.

That is, in the image reading apparatuses 10 and 110, in a case where the document G is skewed, the CPU 51 may discharge the non-skewed document G1 to the document discharge unit 24 and discharge the skewed document G2 to the document discharge unit 24 at a position that deviates from the non-skewed document G1 in the intersection direction.

In addition, in the present exemplary embodiment, the notification process (Step S107) is executed. However, the notification process may not be executed.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content. In addition, the program of the present application may be provided as a program product.

The present invention is not limited to the above-mentioned exemplary embodiment, and various modifications, changes, and improvements can be made without departing from the gist of the present invention. For example, two or more of the above-described modification examples may be configured to be combined with each other as appropriate.

### (Supplementary Notes)

(((1))) An information processing system comprising:
   a processor configured to:
   in a reading apparatus that transports a document and reads an image of the document, in a case where the document is skewed, indicate that the document is skewed, using at least one of a position of the transported document or a mark affixed to the document.
(((2))) The information processing system according to (((1))), wherein the processor is configured to:
   in the reading apparatus, in a case where the document is skewed, affix an identification mark for identifying whether or not skew occurs to at least one of a skewed document or a non-skewed document.
(((3))) The information processing system according to (((2))), wherein the processor is configured to:
   in the reading apparatus, in a case where the document is skewed, not affix the identification mark to the skewed document and affix the identification mark to the non-skewed document.
(((4))) The information processing system according to (((2))) or (((3))), wherein the processor is configured to:
   in the reading apparatus, in a case where the document is skewed, affix the identification mark to a surface opposite to a reading surface of the document.
(((5))) The information processing system according to any one of (((1))) to (((4))), wherein the processor is configured to:
   in the reading apparatus, in a case where the document is skewed, transport a skewed document and a non-skewed document to different transport destinations.
(((6))) The information processing system according to (((5))), wherein the processor is configured to:
   in the reading apparatus, in a case where the document is not skewed, transport the document to a first transport destination; and
   in the reading apparatus, in a case where the document is skewed, transport the non-skewed document to the first transport destination and transport the skewed document to a second transport destination.
(((7))) The information processing system according to any one of (((1))) to (((6))), wherein the processor is configured to:
   in the reading apparatus, in a case where the document is skewed, indicate that the document is skewed, using at least one of the position of the transported document or the mark affixed to the document and then provide a notification to prompt re-reading of the skewed document to a user.
(((8))) The information processing system according to (((7))), wherein the processor is configured to:
   in a case where an execution instruction to re-read the skewed document is acquired, cause the reading apparatus to transport the document at a speed lower than a transport speed before the re-reading and to read the image, or to read the document in a stationary state.
(((9))) An information processing program causing a computer to execute a process comprising:
   in a reading apparatus that transports a document and reads an image of the document, in a case where the document is skewed, indicating that the document is skewed, using at least one of a position of the transported document or a mark affixed to the document.
(((10))) An image reading apparatus comprising:
   a transport unit that transports a document;
   a reading unit that reads an image of the document; and
   an indication unit that, in a case where the document is skewed, indicates that the document is skewed, using at least one of a position of the transported document or a mark affixed to the document.

According to the configuration of (((1))), in the reading apparatus that transports the document and reads the image of the document, in a case where the document is skewed, it is easier to perform a sorting operation of sorting the skewed document and the non-skewed document, as compared to a case where the processor executes only a process of displaying that the document is skewed on a screen.

According to the configuration of (((2))), the user can perform the sorting operation of sorting the skewed document and the non-skewed document while checking the identification mark affixed to the document.

According to the configuration of (((3))), in the re-reading of the skewed document, the reading of the identification mark is suppressed, as compared to a case where the processor affixes the identification mark to the skewed document.

According to the configuration of (((4))), in the re-reading of the reading surface of the document, the reading of the identification mark is suppressed, as compared to a case where the processor affixes the identification mark to the reading surface of the document.

According to the configuration of (((5))), it is easier to perform an operation of gathering only the skewed documents together, as compared to a case where the processor always transports the skewed document and the non-skewed document to the same transport destination.

According to the configuration of (((6))), it is easier for the user to recognize the skewed document, as compared to a case where the processor transports the skewed document to the first transport destination.

According to the configuration of (((7))), in the reading apparatus, in a case where the document is skewed, it is easier for the user to recognize that the skewed document is to be re-read, as compared to a case where the processor executes only the process of indicating that the document is skewed, using at least one of the position of the transported document or the mark affixed to the document.

According to the configuration of (((8))), in a case where the processor causes the reading apparatus to always execute the same reading operation, skew is less likely to occur in the re-reading of the skewed document.

According to the configuration of (((9))), in the reading apparatus that transports the document and reads the image of the document, in a case where the document is skewed, it is easier to perform the sorting operation of sorting the skewed document and the non-skewed document, as compared to a case where the processor executes only the process of displaying that the document is skewed on the screen.

According to the configuration of (((10))), in a case where the document is skewed, it is easier to perform the sorting operation of sorting the skewed document and the non-skewed document, as compared to a case where the indication unit executes only the process of displaying that the document is skewed on the screen.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10, 110: image reading apparatus (example of reading apparatus)
24: document discharge unit (example of transport destination and first transport destination)
25: document discharge unit (example of transport destination and second transport destination)
26, 27: reading unit
29: stamping unit (an example of indication unit)
30: transport unit
51: CPU (example of processor)
100: image reading system (example of information processing system)
G: document

## Claims

1. An information processing system comprising:
a processor configured to:
in a reading apparatus that transports a document and reads an image of the document, in a case where the document is skewed, indicate that the document is skewed, using at least one of a position of the transported document or a mark affixed to the document.

2. The information processing system according to claim 1, wherein the processor is configured to:
in the reading apparatus, in a case where the document is skewed, affix an identification mark for identifying whether or not skew occurs to at least one of a skewed document or a non-skewed document.

3. The information processing system according to claim 2, wherein the processor is configured to:
in the reading apparatus, in a case where the document is skewed, not affix the identification mark to the skewed document and affix the identification mark to the non-skewed document.

4. The information processing system according to claim 2 or 3, wherein the processor is configured to:
in the reading apparatus, in a case where the document is skewed, affix the identification mark to a surface opposite to a reading surface of the document.

5. The information processing system according to any one of claims 1 to 4, wherein the processor is configured to:
in the reading apparatus, in a case where the document is skewed, transport a skewed document and a non-skewed document to different transport destinations.

6. The information processing system according to claim 5, wherein the processor is configured to:
in the reading apparatus, in a case where the document is not skewed, transport the document to a first transport destination; and
in the reading apparatus, in a case where the document is skewed, transport the non-skewed document to the first transport destination and transport the skewed document to a second transport destination.

7. The information processing system according to any one of claims 1 to 6, wherein the processor is configured to:
in the reading apparatus, in a case where the document is skewed, indicate that the document is skewed, using at least one of the position of the transported document or the mark affixed to the document and then provide a notification to prompt re-reading of the skewed document to a user.

8. The information processing system according to claim 7, wherein the processor is configured to:
in a case where an execution instruction to re-read the skewed document is acquired, cause the reading apparatus to transport the document at a speed lower than a transport speed before the re-reading and to read the image, or to read the document in a stationary state.

9. An information processing program causing a computer to execute a process comprising:
in a reading apparatus that transports a document and reads an image of the document, in a case where the document is skewed, indicating that the document is skewed, using at least one of a position of the transported document or a mark affixed to the document.

10. An image reading apparatus comprising:
a transport unit that transports a document;
a reading unit that reads an image of the document; and
an indication unit that, in a case where the document is skewed, indicates that the document is skewed, using at least one of a position of the transported document or a mark affixed to the document.
